# EUROPEAN PATENT SPECIFICATION

(11) **EP 2 204 567 B1**
(45) Date of publication and mention of the grant of the patent: **10.08.2016**
(21) Application number: 09015894.0
(22) Date of filing: 22.12.2009
(51) Int. Cl.: F02K 1/36, F02K 3/077, B64C 21/06, F04D 29/64, F01D 9/06, F04D 29/68, F02K 3/02, F02K 3/075

(54) **Apparatus and method for controlling the boundary layer in a gas turbine engine**
Vorrichtung und Verfahren zur Steuerung der Grenzschicht in einem Gasturbinentriebwerk
Dispositif et procédé de contrôle de la couche limite dans un moteur à turbine à gaz

(30) Priority: 31.12.2008 US 204004 P; 23.10.2009 US 604776
(43) Date of publication of application: 07.07.2010
(73) Proprietor: Rolls-Royce Corporation, Indianapolis, Indiana 46225 (US)
(72) Inventor: Syed Jalaluddin, Khalid, Indianapolis Indiana 46231 (US)
(74) Representative: Beyer, Andreas

(56) References cited:
- US-A- 3 572 960

## Description

### FIELD OF THE INVENTION

The present invention generally relates to gas turbine engines useful in removing a boundary layer of air, and more particularly, but not exclusively, to integrated aircraft engine with an ejector having fluid supplied by boundary layer bleed flow.

### BACKGROUND

Challenges remain in providing aircraft propulsion systems capable of producing high thrust, emitting low jet noise, minimizing installation drag, minimizing fuel consumption, and ensuring fuel and lubrication temperatures are within specification requirements, among potential other challenges. The present inventions address problems associated with existing propulsion systems by providing a novel and non-obvious contributions relating thereto.

US patent 3 572 960 discloses a gas turbine engine having a reduced noise level in operation. To achieve the reduced noise level, pressurized air is ducted from a point downstream of outlet guide vanes through one or more conduits to the outer ends of inlet guide vanes, wherein both the outlet guide vanes and the inlet guide vanes form part of a fan. The inlet guide vanes are of hollow construction, providing internal cavities which open into a header. Slots are formed in the outer trailing edge portions of the inlet guide vanes so that pressurized air may be discharged therefrom. The pressurized air exiting the slots serves to eliminate a wake condition which otherwise develops at the trailing edge of each inlet guide vane. By eliminating the wake condition, pressure pulses which generate sound may be drastically reduced.

### SUMMARY OF THE INVENTION

The present invention provides an apparatus according to claim 1 as well as a method according to claim 7, thus improving entrainment of boundary layer flow by the flow stream flowing through a flow passage of the gas turbine engine.

### BRIEF DESCRIPTION OF THE DRAWINGS

The description herein makes reference to the accompanying drawings wherein like reference numerals refer to like parts throughout the several views, and wherein:
- FIG. 1: is a schematic cross-sectional view of a prior art gas turbine engine with a nozzle ejector;
- FIG. 2: is a schematic cross-sectional view of a gas turbine engine with a boundary layer ejector;
- FIG. 3: is a schematic cross-sectional view of a portion of a gas turbine engine with a boundary layer ejector according to an embodiment of the present application;
- FIG. 4a: is a perspective view of one form of aircraft using the boundary layer ejector of the present application;
- FIG. 4b: is a perspective view of another form of aircraft using the boundary layer ejector of the present application;
- FIG. 4c: is a perspective view of yet another form of aircraft using the boundary layer ejector of the present application; and
- FIG. 4d: is a front view of an aircraft having one embodiment of the present application.

### DETAILED DESCRIPTION OF THE ILLUSTRATIVE EMBODIMENTS

For purposes of promoting an understanding of the principles of the invention, reference will now be made to the embodiments illustrated in the drawings and specific language will be used to describe the same. It will nevertheless be understood that no limitation of the scope of the invention is thereby intended.

Boundary layer fluid flow is defined by the fluid in a layer adjacent to a body within which the major effects of viscosity are concentrated. In simplistic terms viscosity can be thought of as the thickness of the low velocity fluid or the resistance of the fluid to flow along a pathway. Viscous fluids create a boundary layer adjacent a body wherein the velocity of the fluid is approximately zero at the surface of the body and increases proportionally until it reaches the bulk fluid velocity outside of the boundary layer. The boundary layer produces losses due to aerodynamic drag on the aircraft. The boundary layer can be thought of as a dead zone wherein minimal useful fluid work can be done. The present invention advantageously removes at least a portion of boundary layer fluid and converts the boundary layer fluid into a useful means of increasing system efficiency and providing a source of thermal management.

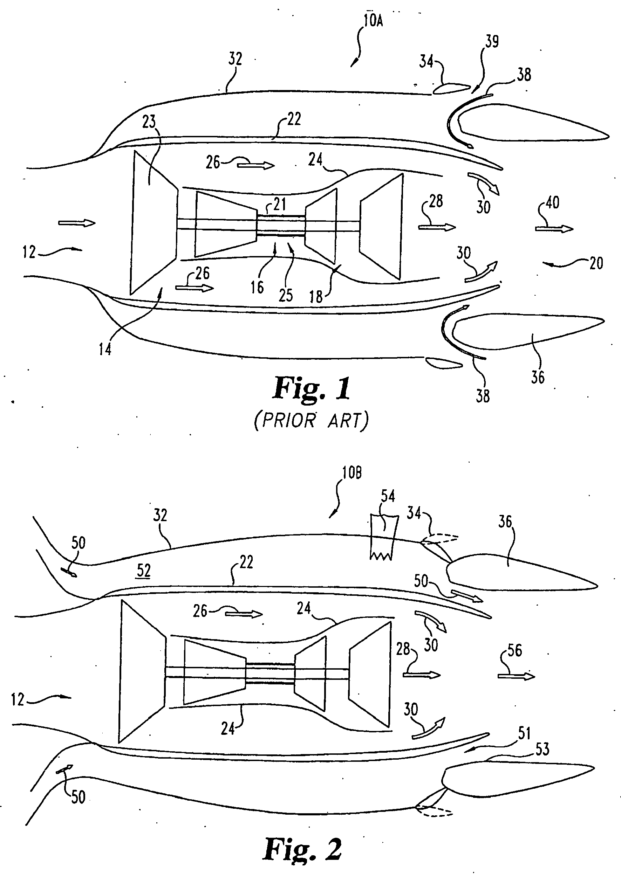

Referring to FIG. 1, a prior art gas turbine engine 10A is illustrated. Components of the prior art engine 10A that are similar to the engine 10B in FIG. 2, will have the same numerical description. The gas turbine engine 10A, as well as the engine 10B, can take a variety of forms and in application can be used to provide power to an aircraft. In some embodiments the gas turbine engine 10A and/or 10B can be an adaptive cycle engine or a variable cycle engine. In other embodiments the gas turbine engine 10A and/or 10B can have any number of spools, including just one. In still further embodiments the gas turbine engine 10A and/or 10B can be a turbojet, turboprop, turbofan, or a turboshaft engine.

As used herein, the term "aircraft" includes, but is not limited to, helicopters, airplanes, unmanned space vehicles, fixed wing vehicles, variable wing vehicles, rotary wing vehicles, unmanned combat aerial vehicles, tailless aircraft, hover crafts, and other airborne and/or extraterrestrial (spacecraft) vehicles. Further, the present invention is contemplated for utilization in other applications that may not be coupled with an aircraft such as, for example, industrial applications, power generation, pumping sets, naval propulsion, weapon systems, security systems, perimeter defense/security systems, and the like known to one of ordinary skill in the art.

The gas turbine engine 10A of the illustrative embodiment includes an inlet section 12, a compression section 14, a combustion section 16, an expansion or turbine section 18, and an exhaust section 20. In operation, air is drawn in through the inlet 12 and compressed to a high pressure relative to ambient pressure in the compression section 14. The air is mixed with fuel in the combustion section 16 wherein the fuel/air mixture burns and produces a high temperature and pressure working fluid from which the turbine section 18 extracts power. The turbine section 18 is mechanically coupled to the compression section 14 via a shaft 21. The shaft 21 rotates about a centerline axis that extends axially along the longitudinal axis of the engine 10A, such that as the turbine section 18 rotates due to the forces generated by the high pressure working fluid the compression section 14 is rotatingly driven by the turbine section 18 to produce compressed air.

The compression section 14 can optionally include a low-pressure fan 23 which produces a bypass flow stream represented by arrow 26. The bypass flow stream 26 flows between an outer case 22 and an inner faring 24 that encompasses the core 25 of the engine 10A. The core 25 produces a core exhaust flow represented by arrow 28. Mixed engine exhaust flow represented by arrows 30 is the combined mass flow of the bypass flow 26 and the core flow 28.

A nacelle 32 encompasses the outer case 22 of the engine 10A. A variable flap 34 is positioned adjacent the aft end of the nacelle 32. In other embodiments, however, the variable flap 34 can be located at positions other than adjacent the aft end of the nacelle 32. A nozzle 36 is positioned further aft of the variable flap 34 in the illustrative embodiment. When the variable flap 34 is in an open position a nozzle ejector flow 38 can be entrained through a passageway 39 formed between the variable flap 34 and the nozzle 36. In some embodiments, however, the passageway 39 can be formed between the variable flap 34 and a structure or structures other than the nozzle 36. A total exhaust flow represented by arrow 40 includes the mixed engine exhaust flow 30 and the nozzle ejector flow 38.

Referring to FIG. 2, a gas turbine engine 10B including boundary layer bleed flow represented by arrow 50 is illustrated. The boundary layer bleed flow 50 can be transported through bleed ports (not shown in FIG. 2 but described and shown further below) from any surface of the engine 10B or aircraft (also not shown in FIG. 2 but described and shown further below) and directed through a nacelle passageway 52. The bleed ports can take any variety of forms including slots or holes, among potential others. As a matter of convenience of description, therefore, the term "bleed port" can refer to any of these types of configurations. The surface from which the boundary layer bleed flow 50 originates from can be any surface which is exposed to a moving fluid. Such surfaces include the outside portion of a nacelle exposed to the free stream, the inside surface forming part of the passageway through which the bypass flow stream passes, among potential other surfaces.

In some embodiments one or more heat exchangers 54 can be disposed within the passageway 52 to remove heat from system components (not shown). The one or more heat exchangers 54 can take a variety of forms and, in those applications in which multiple heat exchanges 54 are used, not all need be the same. The temperature of the boundary layer bleed flow 50 can be approximately the same as the ambient temperature, therefore at altitude the boundary layer bleed flow 50 can provide a large heatsink. In those embodiments having one or more heat exchangers, after the boundary layer bleed flow 50 passes the heat exchanger 54, the flow can be accelerated through a channel 51 between the nozzle 36 and the outer case 22. Whether or not heat exchangers are present, however, it will be understood that the channel 51 can be of an orientation to permit the flow to be accelerated. For example, the channel 51 can have a smaller cross sectional area relative to the passageway 52 at locations upstream of the channel 51.

In some applications a channel member 53 can be used to selectively vary the cross sectional area of the channel 51, and in particular can be used to change the exit area of the passageway 52. The channel member 53 can be actuated at a variety of rates which can depend on properties of a total exhaust flow 56 which is the boundary layer bleed flow 50 mixed with the bypass flow 26 and the core flow 28. Removing boundary layer flow from external surfaces reduces the drag and the additional mass flow added into the total exhaust flow 56 increases the thrust of the engine 10B.

In the takeoff and taxi mode the variable flap 34 can be opened as shown in the dashed outline which permits air to enter from the rear and go around the ejector leading edge into the exhaust stream 56, similar to that depicted in Fig. 1. The integrated static pressure around the ejector results in a thrust component while the jet noise is reduced as a result of reduced exhaust velocity. In cruise mode, the variable flap 34 can be closed as depicted by the solid outline in FIG. 2. Boundary layer bleed air 50 is then pulled from passageways connected to a surface associated with any of the nacelle, pylon, wing, or fuselage or other locations that a boundary layer can build up on. The resulting removal of the boundary layer reduces the installation/aircraft drag. The RAM effect during cruise in conjunction with ejector pumping can effectively remove the boundary layer especially since the ejector is being driven by a high velocity (normally sonic but can be supersonic) and high mass flow primary nozzle 36 which will entrain a large amount of secondary flow. Ejector pumping can be further enhanced by forming the shroud, concentric surface, or other structure that separates the primary nozzle flow from the secondary boundary layer flow as a lobed mixer configuration. Such a configuration can assist in forcing mixing between the two flows and permit shortening of the engine length.

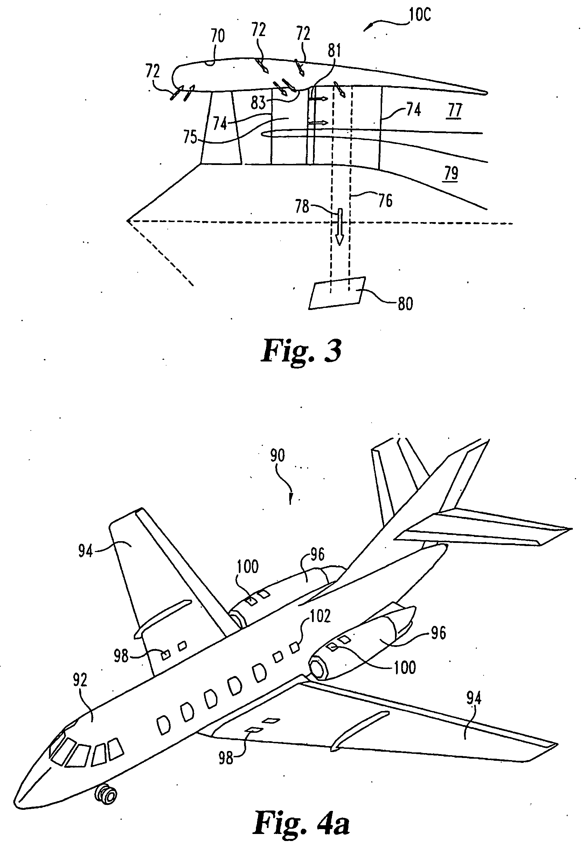

Referring to FIG. 3, an alternate engine configuration 10C is depicted. It will be appreciated, however, that the alternate engine configuration can have a number of the variations described above with respect to the gas turbine engines 10A and/or 10B. A nacelle 70 can include boundary layer bleed ports 72 fluidically connected to a member 74 or the like extending at least partially across the flow path depicted. The member 74 can take the form of a strut, an outlet guide vane, or other type of member disposed within the flow path. The member includes a passage 75 through which a boundary layer which has been pulled through boundary layer bleed ports 72 can pass. The passage 75 can be the hollow interior of the member 74, but can also take other forms in different embodiments. In some embodiments the passage 75 can extend across the bypass flow path 77 and the core flow path 79. The member 74 includes one or more exit apertures 81 through which the boundary layer which has been pulled through boundary layer bleed ports 72 can pass after passing through the passage 75. The one or more exit apertures 81 can be formed in or near the trailing edge of the member 74. In some forms a conduit 76 can be provided in a member 74 which is operable to carry relatively cool boundary layer bleed air 78 to one or more components 80 within the engine 10C requiring cooling flow. For example the component 80 can be an electronic apparatus or a relatively hot mechanical apparatus such as a combustion or turbine component. Though the conduit 76 is depicted in a member 74 downstream of the member 74 having the exit apertures 81, it will be appreciated that the conduit 76 can be provided in the member 74 shown as having the apertures 81, but in an embodiment that otherwise lacks the apertures 81. In other words, in lieu of or in addition to the aperture 81, the member 74 can include the conduit 76. In still further embodiments the conduit 76 can lead to an ejector such as the nozzle ejector depicted in the embodiments of Fig. 2.

In some forms the alternate engine configuration 10C can be used to remove a boundary layer through boundary layer bleed ports 72 to increase inlet pressure recovery and reduce pressure distortion seen by the fan. The resulting higher pressure recovery increases thrust and lowers specific fuel consumption. The lower pressure distortion increases stall margin.

The engine 10C includes a flow path protrusion 83 that can reduce the cross sectional area of the bypass flow path 77 at that location. For example, in some forms outlet guide vanes (OGV's) are provided to eliminate circumferential swirl and can have a flow area that increases from the leading to the trailing edge. The inner and outer walls of the OGV's can be tapered to reduce the area increase thus increasing the OGV exit velocity and ejector pumping. The flow path protrusion 83 can be used to locally lower the pressure of the fluid passing through the bypass flow path 77 so that in the case of boundary layer which has been pulled through boundary layer bleed ports 72 and is discharged through the exit aperture 81 can be entrained by the flow through the bypass flow path 77. The flow path protrusion 83 can be actuated and moved to a variety of positions to selectively lower or raise the local pressure and thus vary the ability of the flow through the bypass flow path 77 to entrain the boundary layer which has been pulled through boundary layer bleed ports 72.

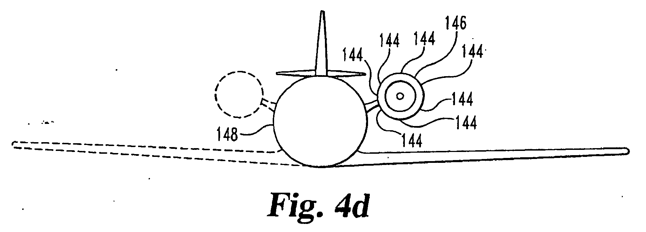

Referring now to FIG. 4a an aircraft 90 is depicted having a fuselage 92 with wings 94 extending therefrom and gas turbine engines 96 mounted thereon. The wings 94 can include a plurality of bleed slots 98 for removing boundary layer flow from the wings 94 and delivering said flow to the ejector nozzle or other components disposed on the aircraft 90, such as through any of the various embodiments discussed herein. In addition to or alternatively, nacelle bleed slots 100 and fuselage bleed slots 102 can be utilized for removing boundary layer flow. Referring briefly to Fig. 4d, in some aircraft configurations the Mach number in the passage located between the nacelle 146 and the fuselage 148 could increase because of the blockage created by the boundary layer thus resulting in increased installation drag. Removal of this boundary layer through one or more of the bleed slots 144 depicted in Fig. 4d can result in decreased drag. The bleed slots 144 can be located on either or both of the fuselage 148 or nacelle 146.

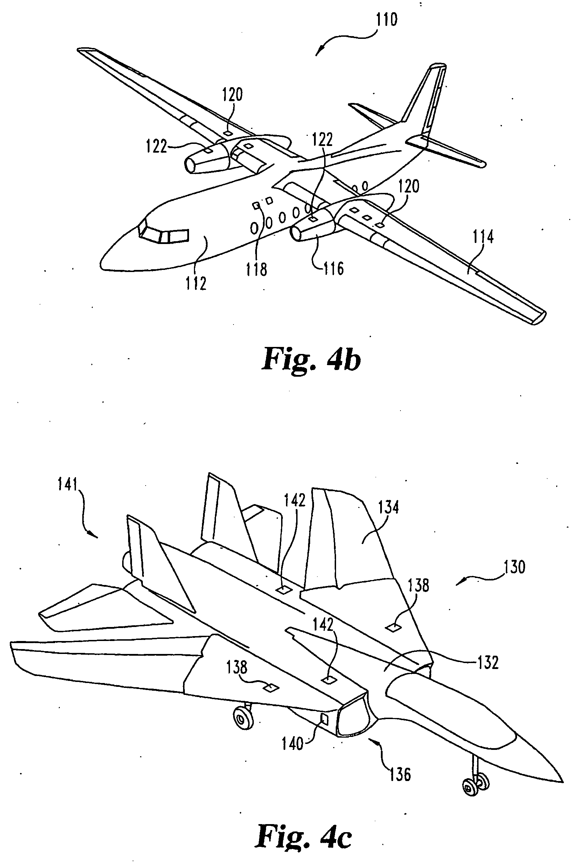

Referring to FIG 4b, an alternate aircraft configuration 110 is depicted with wing 114 mounted engines 116. Similar to the aircraft of FIG. 4a the fuselage 112, the wings 114, and the engines 116 can all include boundary layer bleed slots 118, 120 and 122 respectively.

In yet another aircraft configuration, FIG 4c illustrates a military style aircraft 130 wherein the engines 136 are embedded within a fuselage 132. Again, similar to the previous aircraft of FIGS. 4a and 4b the fuselage 132, a nacelle 141 surrounding the engine 136 and the wings 134, can all include boundary layer bleed slots 142, 140, and 138 respectively. The slots can also be located between the inlet and the fuselage (sometimes referred to as the "arm pit") where the fuselage boundary layer can thicken.

It should be understood that the boundary layer bleed slots can be positioned anywhere on the aircraft and/or engine and are not limited by the examples disclosed in the present application. Any type of aircraft or spacecraft that can advantageously use the teachings of this disclosure is contemplated by the present invention.

While the invention has been described in connection with what is presently considered to be the most practical and preferred embodiment, it is to be understood that the invention is not to be limited to the disclosed embodiment(s), but on the contrary, is intended to cover various modifications and equivalent arrangements included within the scope of the appended claims. Furthermore it should be understood that while the use of the word preferable, preferably, or preferred in the description above indicates that feature so described may be more desirable, it nonetheless may not be necessary and any embodiment lacking the same may be contemplated as within the scope of the invention, that scope being defined by the claims that follow. In reading the claims it is intended that when words such as "a," "an," "at least one" and "at least a portion" are used, there is no intention to limit the claim to only one item unless specifically stated to the contrary in the claim. Further, when the language "at least a portion" and/or "a portion" is used the item may include a portion and/or the entire item unless specifically stated to the contrary.

## Claims

1. An apparatus comprising:
a gas turbine engine (10C) having a rotatable blade operable to produce a flow stream (30) through a flow passage (77, 79);
a surface along which a working fluid can pass and having an opening (72) through which at least a portion of a boundary layer of the working fluid can be withdrawn; and
an airflow member (74) extending across the flow passage (77, 79) and having an aperture (81) through which the boundary layer withdrawn from the surface can pass into the flow passage,
**characterized in that** the flow passage (77, 79) includes a moveable member (83) operable to alter a cross sectional area of the flow passage to modulate the pressure of the flow stream (30) to entrain the withdrawn boundary layer air.

2. The apparatus of claim 1,
wherein the aperture (81) is located proximate a trailing edge of the airflow member (74).

3. The apparatus of claim 1,
wherein the gas turbine engine (10C) is a turbofan engine, the rotatable blade is a fan blade, and the flow passage is a bypass duct (77).

4. The apparatus of claim 3,
wherein the airflow member (74) is an outlet guide vane downstream of the fan blade.

5. The apparatus of claim 3,
wherein a cross sectional area of the bypass duct decreases between the leading edge and the trailing edge of the airflow member (74).

6. The apparatus of claim 1,
which further includes an ejector pump that includes a primary fluid flow and a secondary fluid flow, wherein the boundary layer withdrawn from the surface is the secondary fluid flow and the flow stream through the flow passage is the primary fluid flow.

7. A method comprising:
conveying a flow stream through a flow passage of a gas turbine engine and along a side of an airflow member (74) extending across the flow passage;
withdrawing a portion of a boundary layer flowing along a flow surface; and
entraining the portion of the boundary layer through an aperture (81) in the airflow member and with the flow stream,
**characterized by** reducing a cross sectional area of the flow passage near a downstream portion of the airflow member (74) relative to an upstream portion of the airflow member, wherein the reducing includes actuating a portion of the flow passage.

## Patentansprüche

1. Vorrichtung, mit:
einem Gasturbinentriebwerk (10C), das eine drehbare Turbinenschaufel aufweist, die dazu betreibbar ist, einen Massenstrom (30) durch einen Strömungskanal (77, 79) zu erzeugen,
einer Oberfläche, längs derer ein Arbeitsfluid strömen kann und die eine Öffnung (72) hat, durch die zumindest ein Teil einer Grenzschicht des Arbeitsfluids abgezogen werden kann, und
einem Luftströmungsbauteil (74), das sich quer durch den Strömungskanal (77, 79) erstreckt und eine Öffnung (81) hat, durch die die von der Oberfläche abgezogene Grenzschicht in den Strömungskanal gelangen kann,
**dadurch gekennzeichnet, dass** der Strömungskanal (77, 79) ein bewegliches Bauteil (83) umfasst, welches dazu betreibbar ist, einen Querschnittsbereich des Strömungskanals zum Modulieren des Drucks des Massenstroms (30) zu ändern, um die abgezogene Grenzschichtluft mitzureißen.

2. Vorrichtung nach Anspruch 1,
bei der die Öffnung (81) sich nahe einer Hinterkante des Luftströmungsbauteils (74) befindet.

3. Vorrichtung nach Anspruch 1,
bei der das Gasturbinentriebwerk (10C) ein Mantelstrom-Triebwerk ist, die drehbare Turbinenschaufel eine Gebläseschaufel ist und der Strömungskanal ein Bypasskanal (77) ist.

4. Vorrichtung nach Anspruch 3,
bei der das Luftströmungsbauteil (74) eine Auslassleitschaufel stromabwärts der Gebläseschaufel ist.

5. Vorrichtung nach Anspruch 3,
bei der eine Querschnittsfläche des Bypasskanals sich zwischen der Vorderkante und der Hinterkante des Luftströmungsbauteils (74) verringert.

6. Vorrichtung nach Anspruch 1,
ferner umfassend eine Ejektorpumpe, die einen primären Fluidstrom und einen sekundären Fluidstrom aufweist, wobei die von der Oberfläche abgezogene Grenzschicht der sekundäre Fluidstrom ist und der Massenstrom durch den Strömungskanal der primäre Fluidstrom ist.

7. Verfahren, umfassend:
Fördern eines Massenstroms durch einen Strömungskanal eines Gasturbinentriebwerks und entlang einer Seite eines sich quer durch den Strömungskanal erstreckenden Luftströmungsbauteils (74),
Abziehen eines Teils einer entlang einer Strömungsoberfläche fließenden Grenzschicht, und
Mitreißen des Teils der Grenzschicht durch eine Öffnung (81) in dem Luftströmungsbauteil und mit dem Massenstrom,
**gekennzeichnet durch** Verringern einer Querschnittsfläche des Strömungskanals nahe einem stromabwärtigen Bereich des Luftströmungsbauteils (74) bezüglich eines stromaufwärtigen Bereichs des Luftströmungsbauteils, wobei das Verringern ein Betätigen eines Teils des Strömungskanals beinhaltet.

## Revendications

1. Appareil comprenant :
un moteur à turbine à gaz (10C) comportant une aube rotative opérable pour produire un flux d'écoulement (30) à travers un passage d'écoulement (77, 79) ;
une surface le long de laquelle un fluide de travail peut passer et comportant une ouverture (72) à travers laquelle au moins une partie d'une couche limite du fluide de travail peut être retirée ; et
un élément d'écoulement d'air (74) s'étendant à travers le passage d'écoulement (77, 79) et comportant une ouverture (81) par l'intermédiaire de laquelle la couche limite retirée de la surface peut passer dans le passage d'écoulement,
**caractérisé en ce que** le passage d'écoulement (77, 79) comprend un élément mobile (83) opérable pour modifier une zone de section transversale du passage d'écoulement pour moduler la pression du flux d'écoulement (30) pour entraîner l'air de la couche limite retirée.

2. Appareil selon la revendication 1,
dans lequel l'ouverture (81) est placée près d'un bord de fuite de l'élément d'écoulement d'air (74).

3. Appareil selon la revendication 1,
dans lequel le moteur à turbine à gaz (10C) est un moteur à double flux, l'aube rotative est une aube de soufflante, et le passage d'écoulement est un conduit de dérivation (77).

4. Appareil selon la revendication 3,
dans lequel l'élément d'écoulement d'air (74) est un aubage directeur de sortie en aval de l'aube de soufflante.

5. Appareil selon la revendication 3,
dans lequel une zone de section transversale du conduit de dérivation diminue entre le bord d'attaque et le bord de fuite de l'élément d'écoulement d'air (74).

6. Appareil selon la revendication 1,
qui comprend en outre une pompe à éjecteur qui comprend un écoulement de fluide primaire et un écoulement de fluide secondaire, dans lequel la couche limite retirée de la surface correspond à l'écoulement de fluide secondaire et le flux d'écoulement à travers le passage d'écoulement correspond à l'écoulement de fluide primaire.

7. Procédé comprenant les étapes consistant à :
transporter un flux d'écoulement à travers un passage d'écoulement d'un moteur à turbine à gaz et le long d'un côté d'un élément d'écoulement d'air (74) s'étendant à travers le passage d'écoulement ;
retirer une partie d'une couche limite circulant le long d'une surface d'écoulement ; et
entraîner la partie de la couche limite à travers une ouverture (81) dans l'élément d'écoulement d'air et avec le flux d'écoulement,
**caractérisé par** la réduction d'une zone de section transversale du passage d'écoulement près d'une partie en aval de l'élément d'écoulement d'air (74) par rapport à une partie en amont de l'élément d'écoulement d'air, dans lequel la réduction comprend l'actionnement d'une partie du passage d'écoulement.
